# EUROPÄISCHE PATENTSCHRIFT

(11) **EP 2 727 194 B1**
(45) Veröffentlichungstag und Bekanntmachung des Hinweises auf die Patenterteilung: **15.11.2017**
(21) Anmeldenummer: 12743352.2
(22) Anmeldetag: 27.06.2012
(51) Int. Cl.: H01R 25/00, H01R 9/03, B65G 23/08, B65G 43/10

(54) **FÖRDERANLAGE MIT EINER KABELANORDNUNG SOWIE HERSTELLUNGSVERFAHREN HIERFÜR**
CONVEYOR INSTALLATION COMPRISING A CABLE ARRANGEMENT, AS WELL AS A METHOD FOR PRODUCING SAME
DISPOSITIF DE TRANSPORT POURVU D'UN ENSEMBLE CÂBLE ET PROCÉDÉ DE PRODUCTION CORRESPONDANT

(30) Priorität: 29.06.2011 AT 9482011
(43) Veröffentlichungstag der Anmeldung: 07.05.2014
(73) Patentinhaber: TGW Mechanics GmbH, 4600 Wels (AT)
(72) Erfinder: WOLKERSTORFER, Christoph, A-4600 Wels (AT); REISCHL, Josef, A-4623 Gunskirchen (AT)
(74) Vertreter: Burger, Hannes
(86) Internationale Anmeldenummer: PCT/AT2012/050085
(87) Internationale Veröffentlichungsnummer: WO 2013/000005

(56) Entgegenhaltungen:
- EP-A1- 1 524 210
- EP-B1- 1 277 096
- AT-A4- 508 662
- DE-A1-102006 056 554
- US-A- 4 973 238
- US-A1- 2004 198 090
- US-B1- 6 348 651

## Beschreibung

Die Erfindung betrifft eine Förderanlage mit einem Rahmen und mehreren dazwischen angeordneten, motorisch angetriebenen Fördermitteln und mit einer Kabelanordnung, welche einen ersten elektrischen Leiter sowie wenigstens einen zweiten elektrischen Leiter umfasst, die gegeneinander isoliert sind. Des Weiteren umfasst die Kabelanordnung mehrere im Verlauf der Leiter angeordnete Steckvorrichtungen mit jeweils mehreren elektrischen Kontakten, wobei jeweils wenigstens ein Kontakt mit einem elektrischen Leiter verbunden ist. Weiterhin betrifft die Erfindung ein Verfahren zur Herstellung einer solchen Förderanlage. Kabelanordnungen der genannten Art sind an sich bekannt und werden zum Verdrahten verschiedenster elektrischer Anlagen eingesetzt. Durch die Vorkonfektionierung der Kabelanordnung kann der Aufbau solcher Anlagen sehr rationell erfolgen. Insbesondere trägt eine fabrikmäßig hergestellte Kabelanordnung wesentlich zur Betriebssicherheit der genannten Anlagen bei, da Kontaktfehler auf diese Weise weitgehend vermieden werden können.

Im Speziellen können auch Förderanlagen mit einer solchen Kabelanordnung verdrahtet werden. Förderanlagen sind heutzutage weit verbreitet und beispielsweise aus keiner Lagerhalle, keiner Produktionsstätte und keinem Post- oder Gepäcksverteilsystem mehr wegzudenken. Sie dienen zum komfortablen Fördern und Sortieren von mitunter sehr schweren Lasten. Im Laufe der Zeit haben sich viele Typen von Förderanlagen herausgebildet, die auf einen jeweiligen Einsatzzweck optimiert sind. Sehr häufig sind Förderanlagen als Rollenförderer ausgebildet, bei denen das Fördergut durch einzelne, mit dem Fördergut temporär in Kontakt stehende, Förderrollen transportiert wird.

Beispielsweise ist aus der JP 2004/331270 A dazu eine motorisierte Förderrolle bekannt, bei der eine in der Rolle angeordnete Steuereinheit über ein Kabel mit einem Stecker verbunden ist, welcher in eine am Rahmen angeordnete Anschlussbox eingesteckt wird.

Aus der EP 0 300 128 A1 ist weiterhin eine Rollenförderbahn mit einer tragenden Struktur in Form eines Paneels bekannt, das im Wesentlichen eine ebene Oberfläche darstellt, von der aus nach unten sich U-förmige Kanäle erstrecken, in denen die Rollen aufgenommen sind. In den Seitenwänden der U-förmigen Kanäle sind elektrische Leitungen verlegt, die auf der Höhe der Rollen frei liegen. Beim Einschnappen der Rolle wird diese durch federnde Kontakte, welche an der Rolle angebracht sind, elektrisch kontaktiert.

Die DE 10 2005 046 763 A1 offenbart zudem einen Rollenantrieb bzw. eine mit dem Rollenantrieb ausgestattete Rollentransporteinrichtung. Der besagte Rollenantrieb wird über durch den Rahmen der Fördereinrichtung hindurch ragende Piercing-Kontakte mit einem Energieversorgungskabel und einem Datenkabel elektrisch kontaktiert.

Darüber betrifft die Österreichische Patentanmeldung A2009/01453 der Anmelderin eine Förderanlage zum Fördern von Fördergut mit Rahmenprofilen, einem Bussystem und Förderrollen, wovon eine Förderrolle eine elektrische Kontaktierungsvorrichtung zum Anschluss einer Antriebselektronik an das Bussystem sowie einen Rollenkörper und einen innerhalb von diesem angeordneten Antriebsmotor umfasst. Die Antriebselektronik wird mit Hilfe von Schneidklemm- beziehungsweise Piercing-Kontakten mit einem Kabel zur Energieversorgung und Datenübertragung elektrisch verbunden.

Die US 6,848,933 B1 offenbart schließlich eine weitere Variante einer Anschlussbox für eine Förderanlage, bei der ein Kabel zur Energieversorgung und Datenübertragung mit Hilfe von Schneidklemm- beziehungsweise Piercing-Kontakten elektrisch kontaktiert wird.

Die DE 10 2006 056 554 A1 offenbart eine Montageschiene mit einem in dieser angeordneten Busleitungen aufweisenden Bussystem enthält. Der Bus ist zur Vernetzung von Elektronikmodulen vorgesehen. Dabei erfolgt mittels der Busleitungen die Stromversorgung der Elektronikmodule und vorzugsweise auch die Datenübertragung. Die Elektronikmodule werden bei der Montage auf der Montageschiene über Steckkontakte mit dem Bus kontaktiert. Über den Bus kann jedes mit einer individuellen Adresse codierte Elektronikmodul angesteuert werden und seinerseits Signale bereitstellen, die von anderen Elektronikmodulen benötigt werden.

Aus der US 2004/0198090 A1 ist ein Kabelstrang (Flachbandkabel) für den Kraftfahrzeugbereich bekannt, bei dem eine Vielzahl von Aktuatoren über Schneidkontakte an Stromleitungen des Kabelstranges angeschlossen sind. Der Kabelstrang ist mit seinen Stromleitungen mit einer zentralen Steuerung verbunden.

Eine aus mehreren Segmenten modular aufgebaute Förderanlage ist aus der EP 1 277 096 B1 bekannt. Die Segmente umfassen jeweils einen ersten Rahmen und einem zweiten Rahmen sowie mehrere zwischen dem ersten Rahmen und zweiten Rahmen angeordneten Förderrollen, wovon in jedem Segment zumindest eine motorisch angetriebene Förderrolle angeordnet ist. Die motorisch angetriebenen Förderrollen der Segmente sind an ein Bussystem zur elektrischen Energieversorgung und Datenübertragung angeschlossen. Das Bussystem ist am ersten Rahmen auf einer den Förderrollen abgewandten Seite angeordnet.

Die Aufgabe der Erfindung ist es nun, eine verbesserte Förderanlage sowie ein verbessertes Herstellungsverfahren für eine Förderanlage anzugeben. Im Speziellen soll eine Möglichkeit angegeben werden, eine Förderanlage auf rationelle Weise elektrisch zu verdrahten und dabei gleichzeitig die Zuverlässigkeit derselben zu erhöhen. Die Aufgabe der Erfindung wird durch eine Förderanlage der eingangs genannten Art gelöst, welche eine am Rahmen befestigte und mit den Fördermitteln elektrisch verbundene Kabelanordnung der oben genannten Art umfasst. Weiterhin wird die Aufgabe der Erfindung durch ein Verfahren zur Herstellung einer Förderanlage mit einem Rahmen und mehreren dazwischen angeordneten, motorisch angetriebenen Fördermitteln gelöst, umfassende die Schritte:
a) Herstellen mehrerer Segmente der Förderanlage durch
   - Montage eines Kabels am Rahmen,
   - Montage zumindest eines Fördermittels am Rahmen sowie elektrisches Kontaktieren des zumindest einen Fördermittels mit dem Energieversorgungskabel,
b) Positionieren der Segmente an ihrem Bestimmungsort,
c) Verbinden der Energieversorgungskabel benachbarter Segmente und
d) Montage einer Kabelanordnung der erwähnten Art am Rahmen sowie elektrische Kontaktierung mit den besagten Fördermitteln, wobei die Kabelanordnung über wenigstens zwei

Segmente ungeschnitten verlegt wird.

Vorzugsweise umfasst der Schritt a) die Montage einer Anschlussbox am Rahmen sowie die elektrische Verbindung derselben mit dem Energieversorgungskabel, wobei die elektrische Verbindung des Fördermittels mit dem Energieversorgungskabel durch elektrisches Verbinden des Fördermittels mit der besagten Anschlussbox erfolgt. Das Fördermittel wird in diesem Fall also nicht direkt oder unmittelbar mit dem Energieversorgungskabel verbunden, sondern indirekt oder mittelbar über eine Anschlussbox, wodurch sich die Herstellung einer Förderanlage unter Umständen weiter vereinfacht.

Durch die spezielle Art der Kabelanordnung, das heißt durch das Vorsehen verschiedener Arten von elektrischen Leitern, kann eine Vielzahl an Aufgaben von ein und derselben Kabelanordnung übernommen werden. Insbesondere wird damit die Verkabelung elektrischer Anlagen vereinfacht, bei denen die zu verdrahtenden elektrischen Einheiten einerseits mit durchgehenden elektrischen Leitern, zusätzlich aber auch mit Kabelsegmenten verbunden werden sollen. Die genannte Kabelanordnung ermöglicht die erwähnte Verkabelung in einem Arbeitsschritt. Damit wird einerseits eine Möglichkeit zur rationellen Verdrahtung elektrischer Anlagen geschaffen, durch die Vorkonfektionierung der Kabelanordnung aber auch eine hohe Qualität der Verdrahtung erzielt.

Im Speziellen eignet sich die genannte Kabelanordnung zur elektrischen Verbindung mehrerer motorisch angetriebener Fördermittel der Förderanlage, da sich die erwähnten Eigenschaften der Kabelanordnung dort besonders positiv auf den Herstellungsprozess sowie den Betrieb der Förderanlage auswirken.

Insbesondere ist es von Vorteil, wenn der Rahmen der erfindungsgemäßen Förderanlage mehrere Segmente umfasst und die Kabelanordnung über wenigstens zwei Segmente ungeschnitten verlegt ist. Bei dieser Variante der Erfindung werden die einzelnen Segmente in der Fabrik vorgefertigt und erst an ihrem Bestimmungsort zu einer Förderanlage kombiniert. Schritt b) impliziert dabei das Aneinanderreihen der Segmente bzw. Kombinieren zu einer Förderanlage. Selbstverständlich kann Schritt d) dabei auch vor Schritt c) erfolgen. Weiterhin kann auch die Montage der Anschlussbox am Rahmen im Schritt a) vor der Montage des Energieversorgungskabels erfolgen. Bei der Endmontage werden die Energieversorgungskabel der einzelnen Segmente nun elektrisch miteinander verbunden. Die Kabelanordnung wird dagegen überhaupt wenigstens über zwei Segmente ungeschnitten, d.h. in einem Stück, verlegt. Vorteilhaft ist es dabei, wenn der erste Leiter der Kabelanordnung als Daisy-Chain-Leitung und wenigstens ein zweiter Leiter als Datenbusleitung vorgesehen ist. Wegen der durchgehenden Verlegung der Kabelanordnung über mehrere Segmente hinweg kann eine zuverlässige Datenverbindung mit hoher Datenrate zwischen den Förderrollen und einer zentralen Steuerung realisiert werden. Die Daisy-Chain-Leitung kann dazu verwendet werden, die Förderrollen bei der Initialisierung der Förderanlage zu adressieren. Zu diesem Zweck sind die einzelnen Segmente der Daisy-Chain-Leitung über Schalter verbunden, welche in den Fördermitteln oder in den Anschlussboxen angeordnet sind. Zu Beginn des Initialisierungsprozesses sind diese Schalter geöffnet. Nun wird an einem Ende der Daisy-Chain-Leitung ein Signal eingespeist, z.B. eine Spannung angelegt, was das dem Einspeisepunkt der Spannung nächstgelegene Fördermittel dazu veranlasst, sich über die Datenleitung bei einer zentralen Steuerung zu melden. Die anderen Fördermittel können dieses Signal dagegen nicht detektieren, da die Daisy-Chain-Leitung durch die Schalter in den einzelnen Fördermitteln beziehungsweise Anschlussboxen ja getrennt ist. In Folge wird dem ersten Fördermittel eine Adresse zugewiesen, und der zugeordnete Schalter wird geschlossen, sodass nun auch ein weiteres Fördermittel das genannte Signal empfangen kann und sich wiederum bei der zentralen Steuerung meldet. Auf diese Weise können die Fördermittel nach und nach adressiert werden. Alternativ oder zusätzlich wäre auch denkbar, dass das genannte Verbindungskabel zur Kommunikation zweier benachbarter Anschlussboxen ohne Zuhilfenahme des Datenkabels benutzt wird.

Im Speziellen tritt der Vorteil der Erfindung bei der Verdrahtung einer Förderanlage hervor, bei der Förderrollen als Fördermittel vorgesehen sind. Durch den vergleichsweise geringen Abstand der einzelnen Förderrollen weist eine solche Förderanlage eine hohe Anzahl an Förderrollen auf. Zunehmend wird in einer Förderanlage eine Vielzahl an motorisch angetriebenen und individuell ansteuerbaren Förderrollen verbaut, um den Warentransport auf der Förderanlage flexibel steuern zu können. Dies bedingt aber einen sehr hohen Aufwand für die Verdrahtung, die nach den herkömmlichen Methoden einerseits sehr zeitraubend, andererseits auch nicht besonders zuverlässig ist. Durch die Verwendung der genannten Kabelanordnung und insbesondere auch bei Anwendung des zuvor genannten Herstellungsverfahrens werden einerseits ein hoher Vorfertigungsgrad, andererseits auch eine zuverlässige Datenverbindung miteinander kombiniert. Durch diese Kombination kann die Herstellung einer Förderanlage mit Förderrollen kostengünstig erfolgen, ohne Abstriche bei der Qualität hinnehmen zu müssen.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn zwei zweite Leiter als Twisted-Pair-Leitung ausgeführt und als Datenbusleitung vorgesehen sind. Auf diese Weise ist die Datenbusleitung besonders unempfindlich gegenüber elektromagnetischen Störfeldern, wie sie insbesondere in der rauen Umgebung einer Förderanlage auftreten können.

In diesem Zusammenhang ist es insbesondere auch von Vorteil, wenn die Förderanlage ein am Rahmen angeordnetes und mit den Fördermitteln elektrisch verbundenes Energieversorgungskabel umfasst, wobei die Kabelanordnung außen am Rahmen und das Energieversorgungskabel innen am Rahmen angeordnet ist. Damit kommt der Rahmen der Förderanlage zwischen der Kabelanordnung und dem Energieversorgungskabel bzw. zwischen der Kabelanordnung und einem Antriebsmotor/einer Antriebssteuerung zu liegen, weswegen elektromagnetische Felder, die rund um das Energieversorgungskabel bzw. im Antriebsmotor oder dessen Steuerung entstehen, gut vom Datenbus abgeschirmt werden. Die Datenübertragung kann somit noch zuverlässiger beziehungsweise schneller erfolgen.

Vorteilhaft ist es in diesem Zusammenhang, wenn die elektrische Verbindung der Kabelanordnung mit den Fördermitteln durch eine Ausnehmung im Rahmen hindurch erfolgt. Auf diese Weise braucht eine Verdrahtung nicht umständlich über den Rahmen herum geführt werden. Besonders vorteilhaft ist es in diesem Zusammenhang, wenn eine Steckvorrichtung einer Anschlussbox im Bereich der genannten Ausnehmung angeordnet ist. Auf diese Weise kann die Kabelanordnung direkt durch die Ausnehmung im Rahmen hindurch an der Anschlussbox angesteckt werden, wodurch die Verdrahtung der Förderanlage weiter vereinfacht wird.

Günstig ist es zudem, wenn wenigstens ein zweiter Leiter als Energieversorgungsleitung vorgesehen ist. Bei dieser Variante braucht die Förderanlage überhaupt kein gesondertes Energieversorgungskabel aufzuweisen, sondern wenigstens ein zweiter Leiter der Kabelanordnung fungiert als Energieversorgungsleitung. Die Verdrahtung einer Förderanlage beschränkt sich dann im Wesentlichen auf das Anstecken der Steckvorrichtungen der Kabelanordnung an die Anschlussboxen bzw. Fördermittel.

An diese Stelle wird angemerkt, dass die zur Kabelanordnung genannten Varianten und die sich daraus ergebenden Vorteile sinngemäß auch auf die Förderanlage sowie dessen Herstellungsverfahren anwendbar sind und umgekehrt.

Zum besseren Verständnis der Erfindung wird diese anhand der nachfolgenden Figuren näher erläutert.

Es zeigen jeweils schematisch vereinfachter Darstellung:
- Fig. 1: eine Kabelanordnung mit einem ersten elektrischen Leiter und zwei als Twisted-Pair-Leitung ausgeführten zweiten Leitern;
- Fig. 2: eine beispielhafte Förderanlage schräg von oben gesehen und
- Fig. 3: eine beispielhafte Förderanlage schräg von unten gesehen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

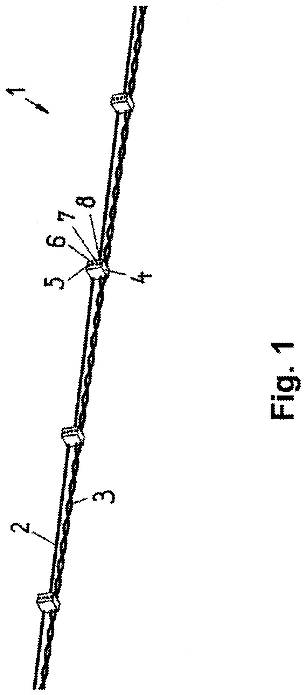

Fig. 1 zeigt eine Kabelanordnung 1, umfassend einen ersten elektrischen Leiter 2 und zwei zweite elektrische Leiter 3, welche gegeneinander isoliert sind, sowie mehrere im Verlauf der Leiter 2, 3 angeordnete Steckvorrichtungen 4. Die Steckvorrichtungen 4 sind in diesem Beispiel als Buchsen mit jeweils mehreren elektrischen Kontakten 5..8 ausgeführt, wobei jeweils wenigstens ein Kontakt 5..8 mit einem elektrischen Leiter 2, 3 verbunden ist. Selbstverständlich könnten die Steckvorrichtungen 4 aber auch als Stecker ausgeführt sein.

Konkret sind die Kontakte 5 und 6 mit dem ersten elektrischen Leiter 2, die Kontakte 7 und 8 mit jeweils einem zweiten elektrischen Leiter 3 verbunden. Dabei ist der erste Leiter 2 an jeder Steckvorrichtung 4 durchtrennt, und je ein Ende des ersten Leiters 2 ist mit je einem elektrischen Kontakt 5, 6 verbunden (Beachte den seitlichen Versatz des ersten Leiters 2 an jeder Steckvorrichtung 4).

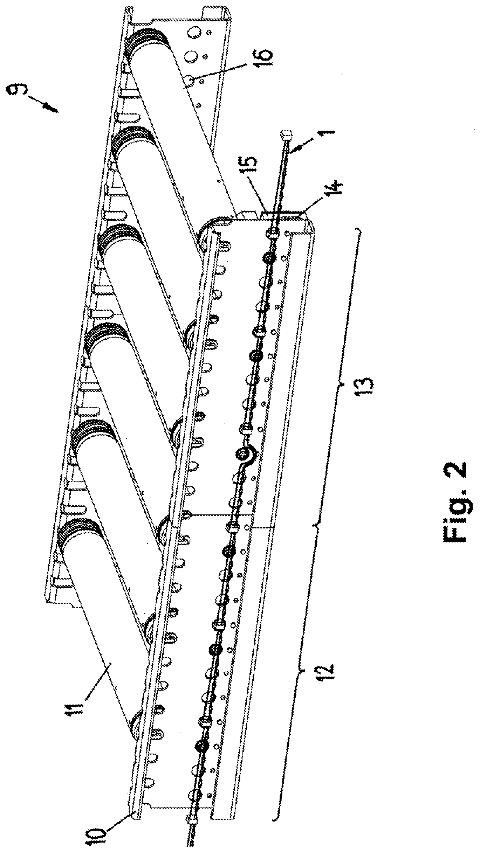

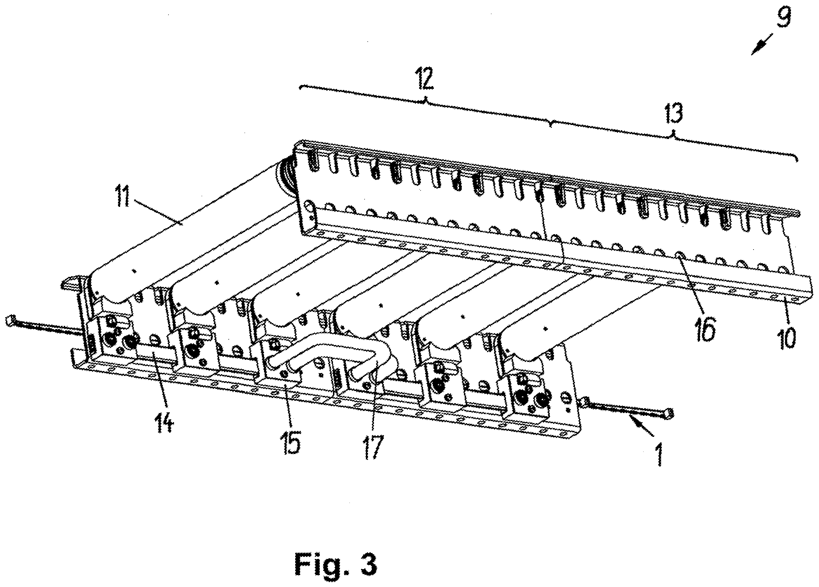

Die Figuren 2 und 3 zeigen weiterhin eine Förderanlage 9 mit einem Rahmen 10 und mehreren dazwischen angeordneten, motorisch angetriebenen Fördermitteln 11 sowie einer am Rahmen 10 befestigten und mit den Fördermitteln 11 elektrisch verbundenen Kabelanordnung 1 (Fig. 2 schräg von oben, Fig. 3 schräg von unten). Konkret sind die Fördermittel 11 in diesem Beispiel als Förderrollen ausgeführt, denkbar wären aber beispielsweise auch Förderbänder, Förderketten und Ähnliches. Insbesondere können die Fördermittel 11 als Gurtförderer (im Speziellen als Staugurtförderer) ausgebildet sein. Dabei wird ein Gurt über mindestens zwei Förderrollen gespannt, welcher dann den Transport der Förderobjekte besorgt. Denkbar wäre darüber hinaus auch, dass die Fördermittel als Flachriemenförderer ausgebildet sind. Dabei werden mehrere Flachriemen über wenigsten zwei Förderrollen gespannt, welche zur besseren Führung der Flachriemen entsprechende Nuten aufweisen können.

Wie aus den Figuren 2 und 3 erkennbar ist, besteht die Förderanlage 9 in diesem Beispiel aus zwei Bauabschnitten 12 und 13, deren Bedeutung später noch näher erläutert wird.

Am Rahmen 10 ist ein Energieversorgungskabel 14 angeordnet, welches mit den Förderrollen 11 elektrisch verbunden ist. Weiterhin sind am Rahmen 10 Anschlussboxen 15 angeordnet, welche für die elektrische Verbindung der Förderrollen 11 mit der Kabelanordnung 1 sowie dem Energieversorgungskabel 14 vorgesehen sind. Die elektrische Verbindung der Kabelanordnung 1 mit den Förderrollen 11 erfolgt dabei vorzugsweise durch eine Ausnehmung 16 im Rahmen 10 hindurch, wobei die Kabelanordnung 1 über die Steckvorrichtungen 4 direkt mit den Anschlussboxen 15 und diese wiederum über ein Anschlusskabel mit den Förderrollen 11 verbunden sind. Schließlich umfasst die Förderanlage 9 noch zwei Verbindungskabel 17 (vereinfacht ohne Stecker dargestellt), welche die Segmente des Energieversorgungskabels 14 über die Bauabschnitte 12 und 13 hinweg verbinden. In diesem Beispiel ist eines der beiden Verbindungskabel 17 für eine 24-Volt-Versorgung, das andere Verbindungskabel 17 für eine 48-Volt-Versorgung vorgesehen. Selbstverständlich ist es aber auch möglich, die Energieversorgungskabel 14 mit einem einzigen Verbindungskabel 17 zu verbinden.

Die Funktion der Förderanlage 9 ist nun wie folgt:
Die Förderrollen 11 sind mit einem nicht dargestellten Antriebsmotor und einer damit verbundenen und ebenfalls nicht dargestellten Steuereinrichtung ausgestattet, welche im Inneren der Förderrollen 11 angeordnet sind. Über das Energieversorgungskabel 14 werden die Förderrollen 11 mit elektrischer Energie versorgt, beziehungsweise können die Förderrollen 11 im Bremsbetrieb auch elektrische Energie in das Energieversorgungskabel 14 zurückliefern. Die Förderrollen 11 können über eine Datenleitung individuell angesteuert werden. Im konkreten Beispiel sind die zweiten Leiter 3 als Datenbusleitung vorgesehen, welche als Twisted-Pair-Leitung ausgeführt ist. Dies trägt zu einer weitgehend störsicheren Datenübertragung von und zu den Förderrollen 11 bei, selbstverständlich könnte die Datenbusleitung aber beispielsweise auch als Bandkabel, insbesondere als geschirmtes Bandkabel ausgeführt sein.

Weiterhin wird der erste Leiter 2 der Kabelanordnung 1 als Daisy-Chain-Leitung im Rahmen eines Initialisierungsprozesses der Förderanlage 9 verwendet. Die einzelnen Segmente des ersten Leiters 2, welche jeweils zwei Förderrollen 11 miteinander verbinden, können dazu über einen Schalter (nicht dargestellt), welcher entweder in der Förderrolle 11 selbst oder aber in der Anschlussbox 15 angeordnet ist, verbunden werden.

Um die Reihenfolge der in der Förderanlage 9 verbauten Förderrollen 11 festzustellen und in Folge deren Adressierung beziehungsweise korrekte Ansteuerung zu ermöglichen, wird an einem Ende der Daisy-Chain-Leitung 2 ein Signal eingespeist, wobei vorausgesetzt wird, dass die erwähnten Schalter vorerst offen sind. Das besagte Signal kann somit nur von der der Einspeisestelle nächst gelegenen Förderrolle 11 beziehungsweise Anschlussbox 15 empfangen werden. Die Position dieser Förderrolle 11 wird nun in einer zentralen Steuerung der Förderanlage 9 (nicht dargestellt) gespeichert, und/oder der Förderrolle 11 beziehungsweise der Anschlussbox 15 wird eine bestimmte Adresse zugeordnet. In Folge wird der erste Schalter geschlossen, sodass das eingespeiste Signal nun auch von der nächsten Förderrolle 11 beziehungsweise der nächsten Anschlussbox 15 empfangen werden kann. Der oben erläuterte Vorgang wird nun so lange wiederholt, bis die Position aller Förderrollen 11 beziehungsweise Anschlussboxen 15 ermittelt wurde.

Dieser Initialisierungsvorgang wird prinzipiell vor Erstinbetriebnahme der Förderanlage 9 durchgeführt, kann aber auch bedarfsweise widerholt werden, beispielsweise wenn die Förderanlage 9 umgebaut oder Komponenten ausgetauscht werden.

Im Folgenden wird ein vorteilhaftes Verfahren zur Herstellung einer Förderanlage 9 vorgestellt:
In einem ersten Schritt a) werden dabei mehrere Segmente 12, 13 der Förderanlage 9 hergestellt, wobei jeweils ein Kabel 14 zur elektrischen Energieversorgung der Förderrolle 11 am Rahmen 10 montiert und die Förderrollen 11 am Rahmen 10 befestigt, sowie mit dem Energieversorgungskabel 14 elektrisch verbunden werden. Im konkreten Beispiel erfolgt dies mittelbar über die Anschlussboxen 15, der Schritt a) umfasst in diesem Beispiel somit auch die Montage der Anschlussboxen 15 am Rahmen 10 und die elektrische Verbindung derselben mit dem Energieversorgungskabel 14. Weiterhin umfasst der Schritt a) in diesem Fall auch die elektrische Verbindung der Förderrollen 11 mit dem Energieversorgungskabel 14 durch elektrisches Verbinden der Förderrollen 11 mit den besagten Anschlussboxen 15.

Denkbar wäre aber natürlich auch eine unmittelbare Verbindung des Energieversorgungskabels 14 mit den Förderrollen 11. Die Anschlussboxen 15 können dann unter Umständen entfallen.

In einem zweiten Schritt b) werden die Segmente 12,13 an ihrem Bestimmungsort positioniert, und in einem dritten Schritt c) werden die Energieversorgungskabel 14 benachbarter Segmente 12, 13 miteinander verbunden. In der Fig. 3 ist dazu gut erkennbar, dass die Anschlussboxen 15 Buchsen aufweisen, über welche die Anschlussboxen 15 und damit die einzelnen Abschnitte des Energieversorgungskabels 14 mit dem eigens dafür vorgesehenen Verbindungskabel 17 verbunden werden.

In einem vierten Schritt d) wird schließlich eine Kabelanordnung 1 am Rahmen 10 montiert und mit den Förderrollen 11 elektrisch kontaktiert, wobei die Kabelanordnung 1 über wenigstens zwei Segmente 12, 13 ungeschnitten verlegt wird.

Bei dieser Variante der Erfindung werden die einzelnen Segmente 12, 13 in der Fabrik vorgefertigt und erst an ihrem Bestimmungsort zu einer Förderanlage 9 kombiniert. Schritt b) impliziert dabei das Aneinanderreihen der Segmente 12, 13 bzw. Kombinieren zu einer Förderanlage 9. Bei der Endmontage werden die Energieversorgungskabel 14 der einzelnen Segmente 12, 13 elektrisch miteinander verbunden. Das Datenkabel, hier realisiert durch die Twisted-Pair-Leitung 2 wird dagegen wenigstens über zwei Segmente ungeschnitten, d.h. in einem Stück, verlegt, sodass eine zuverlässige Datenverbindung mit hoher Datenrate zwischen den Förderrollen 11 und einer zentralen Steuerung realisiert werden kann. Selbstverständlich kann Schritt d) dabei auch vor Schritt c) erfolgen. Weiterhin kann auch die Montage der Anschlussboxen 15 am Rahmen im Schritt a) vor der Montage des Energieversorgungskabels 14 erfolgen.

Im obigen Beispiel ist die Energieversorgungsleitung 14 als gesondertes Kabel ausgeführt. Dies ist vorteilhaft, da die Energieversorgungsleitung 14 so wie in den Figuren 2 und 3 dargestellt innen am Rahmen 10 angeordnet werden kann, wohingegen die Kabelanordnung 1 außen am Rahmen 10 angeordnet wird. Durch den zwischen dem Energieversorgungskabel 14 und dem Datenbus 3 liegenden Rahmen 10 werden elektromagnetische Felder, die rund um das Energieversorgungskabel 14 entstehen, beziehungsweise von den Antriebsmotoren und den Steuerungen der Förderrollen 2 verursacht werden, gut vom Datenbus 3 abschirmt. Gleichwertig kann das Energieversorgungskabel 14 natürlich auch außen am Rahmen 10 angeordnet sein, wohingegen die Kabelanordnung 1 innen am Rahmen 10 befestigt wird.

Darüber hinaus ist es noch vorstellbar, dass die Förderanlage 9 überhaupt kein gesondertes Energieversorgungskabel 14 umfasst, sondern wenigstens ein zusätzlicher zweiter Leiter 3 der Kabelanordnung 1 als Energieversorgungsleitung vorgesehen ist. Auch die Verbindungskabel 17 können dann entfallen. Die Verdrahtung einer Förderanlage 9 beschränkt sich dann im Wesentlichen auf das Einstecken der Steckvorrichtungen 4 in die Anschlussboxen 15 oder in die Förderrollen 11.

Die Ausführungsbeispiele zeigen mögliche Ausführungsvarianten einer Kabelanordnung 1 beziehungsweise einer Förderanlage 9, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Weiterhin wird darauf hingewiesen, dass eine reale Kabelanordnung 1 beziehungsweise eine reale Förderanlage 9 mehr Bestandteile und andere Bestandteile als dargestellt umfassen kann. Zudem wird darauf hingewiesen, dass zum besseren Verständnis des Aufbaus der Kabelanordnung 1 und der Förderanlage 9 diese bzw. deren Bestandteile teilweise unmaßstäblich und/oder vergrößert und/oder verkleinert dargestellt wurden.

### Bezugszeichenaufstellung

- 1: Kabelanordnung
- 2: erster elektrischer Leiter
- 3: zweiter elektrischer Leiter
- 4: Steckeinrichtung
- 5: Kontakt

- 6: Kontakt
- 7: Kontakt
- 8: Kontakt
- 9: Förderanlage
- 10: Rahmen

- 11: Förderrolle
- 12: Bauabschnitt
- 13: Bauabschnitt
- 14: Energieversorgungskabel
- 15: Anschlussbox

- 16: Ausnehmung
- 17: Verbindungskabel

## Patentansprüche

1. Förderanlage (9) mit einem Rahmen (10) und mehreren zwischen einem ersten Rahmenteil und einem zweiten Rahmenteil des Rahmens (10) angeordneten, motorisch angetriebenen Fördermitteln (11), insbesondere Förderrollen, und mit einer mit den Fördermitteln (11) elektrisch verbundenen Kabelanordnung (1), **dadurch gekennzeichnet, dass** am ersten Rahmenteil einerseits auf einer den Fördermitteln (11) zugewandten Seite ein mit den Fördermitteln (11) elektrisch verbundenes Energieversorgungskabel (14) und Anschlussboxen (15) angeordnet sind und dass am ersten Rahmenteil andererseits auf einer den Fördermitteln (11) abgewandten Seite die mit den Fördermitteln (11) elektrisch verbundene Kabelanordnung (1) befestigt ist, wobei die Kabelanordnung (1) einen ersten elektrischen Leiter (2), wenigstens einen zweiten elektrischen Leiter (3) und mehrere im Verlauf der Leiter (2, 3) angeordnete Steckvorrichtungen (4) mit jeweils mehreren elektrischen Kontakten (5..8) umfasst, wobei die Leiter (2, 3) gegeneinander isoliert sind, und jeweils wenigstens ein Kontakt (5..8) mit einem elektrischen Leiter (2, 3) verbunden ist, und wobei der erste Leiter (2) an jeder Steckvorrichtung (4) durchtrennt ist und je ein Ende des ersten Leiters (2) mit je einem elektrischen Kontakt (5, 6) verbunden ist.

2. Förderanlage nach Anspruch 1, **dadurch gekennzeichnet, dass** der erste Leiter (2) als Daisy-Chain-Leitung und wenigstens ein zweiter Leiter (3) als Datenbusleitung vorgesehen ist.

3. Förderanlage nach Anspruch 2, **dadurch gekennzeichnet, dass** zwei zweite Leiter (3) als Twisted-Pair-Leitung ausgeführt und als Datenbusleitung vorgesehen sind.

4. Förderanlage nach Anspruch 2 oder 3, **dadurch gekennzeichnet, dass** wenigstens ein zweiter Leiter (3) als Energieversorgungsleitung vorgesehen ist.

5. Förderanlage nach einem der Ansprüche 2 bis 4, **dadurch gekennzeichnet, dass** die Kabelanordnung (1) zur elektrischen Verbindung mehrerer motorisch angetriebener Fördermittel (11) der Förderanlage (9) vorgesehen ist.

6. Förderanlage nach Anspruch 1, **dadurch gekennzeichnet, dass** die elektrische Verbindung der Kabelanordnung (1) mit den Fördermitteln (11) durch eine Ausnehmung (16) im Rahmen (10) hindurch erfolgt.

7. Verfahren zur Herstellung einer Förderanlage (9) nach Anspruch 1, mit einem Rahmen (10) sowie mehreren zwischen einem ersten Rahmenteil und einem zweiten Rahmenteil des Rahmens (10) angeordneten, motorisch angetriebenen Fördermitteln (11), insbesondere Förderrollen, **gekennzeichnet durch** die Schritte:
a) Herstellen mehrerer Segmente (12, 13) mit je einem ersten Rahmenteil und zweiten Rahmenteil sowie motorisch angetriebenen Fördermitteln (11) durch
- Montage eines Kabels (14) zur elektrischen Energieversorgung der Fördermittel (11) an jedem Segment (12, 13) am ersten Rahmenteil auf einer den Fördermitteln (11) zugewandten Seite,
- Montage zumindest eines Fördermittels (11) am ersten Rahmenteil und zweiten Rahmenteil an jedem Segment (12, 13) sowie elektrisches Kontaktieren der Fördermittel (11) mit dem Energieversorgungskabel (14),
b) Positionieren der Segmente (12, 13) an ihrem Bestimmungsort,
c) Verbinden der Energieversorgungskabel (14) benachbarter Segmente (12, 13) und
d) Montage einer Kabelanordnung an den Segmenten (12, 13) am ersten Rahmenteil auf einer den Fördermitteln (11) abgewandten Seite sowie elektrische Kontaktierung mit den besagten Fördermitteln (11), wobei die Kabelanordnung (1) über wenigstens zwei Segmente (12, 13) ungeschnitten verlegt wird.

8. Verfahren nach Anspruch 7, **dadurch gekennzeichnet, dass** der Schritt a) die Montage einer Anschlussbox (15) am ersten Rahmenteil auf einer den Fördermitteln (11) zugewandten Seite sowie die elektrische Verbindung derselben mit dem Energieversorgungskabel (14) umfasst und die elektrische Verbindung des Fördermittels (11) mit dem Energieversorgungskabel (14) durch elektrisches Verbinden des Fördermittels (11) mit der besagten Anschlussbox (15) erfolgt.

## Claims

1. A conveying system (9) with a frame (10) and several motor-driven conveyors (11), in particular conveyor rollers, arranged between a first frame part and a second frame part of the frame (10), and with a cable arrangement (1) electrically connected with the conveyors (11), **characterized in that** a power supply cable (14) electrically connected with the conveyors (11) and terminal boxes (15) is arranged on the first frame part on a side facing the conveyors (11) on the one hand, and that the cable arrangement (1) electrically connected with the conveyors (11) is mounted to the first frame part on a side facing away from the conveyors (11) on the other hand, wherein the cable arrangement (1) comprises a first electrical conductor (2), at least one second electrical conductor (3) and several connectors (4) arranged along the conductors (2, 3), each with several electrical contacts (5..8), wherein the conductors (2, 3) are insulated from each other, and at least one respective contact (5..8) is connected with an electrical conductor (2, 3), and wherein the first conductor (2) is severed at each connector (4), and a respective end of the first conductor (2) is connected with a respective electrical contact (5, 6).

2. The conveying system according to claim 1, **characterized in that** the first conductor (2) is provided as a daisy chain line, and at least one second conductor (3) as a data bus line.

3. The conveying system according to claim 2, **characterized in that** two second conductors (3) are designed as a twisted pair line, and provided as a data bus line.

4. The conveying system according to claim 2 or 3, **characterized in that** at least one second conductor (3) is provided as a power supply line.

5. The conveying system according to one of claims 2 to 4, **characterized in that** the cable arrangement (1) is provided for electrically connecting several motor-driven conveyors (11) of the conveying system (9).

6. The conveying system according to claim 1, **characterized in that** the cable arrangement (1) is electrically connected with the conveyors (11) through a recess (16) in the frame (10).

7. A method for manufacturing a conveying system (9) according to claim 1, with a frame (10) and several motor-driven conveyors (11), in particular conveyor rollers, arranged between a first frame part and a second frame part of the frame (10), **characterized by** the following steps:
a) Fabricating several segments (12, 13), each with a first frame part and second frame part, as well as motor-driven conveyors (11) by
- mounting a cable (14) for supplying electrical power to the conveyors (11) onto each segment (12, 13) on the first frame part on a side facing the conveyors (11),
- mounting at least one conveyor (11) to the first frame part and second frame part of each segment (12, 13), and electrically contacting the conveyors (11) with the power supply cable (14),
b) Positioning the segments (12, 13) in their intended destination,
c) Connecting the power supply cables (14) of adjacent segments (12, 13), and
d) Mounting a cable installation to the segments (12, 13) on the first frame part on a side facing away from the conveyors (11) and electrically contacting with the aforesaid conveyors (11), wherein the cable installation (1) is installed uncut over at least two segments (12, 13).

8. The method according to claim 7, **characterized in that** the step a) comprises mounting a terminal box (15) on the first frame part on a side facing the conveyors (11) and electrically connecting the latter with the power supply cable (14), and the conveyor (11) is electrically connected with the power supply cable (14) by electrically connecting the conveyor (11) with aforesaid terminal box (15).

## Revendications

1. Installation de convoyage (9) avec un châssis (10) et plusieurs moyens deconvoyage (11) disposés entre une première partie et une deuxième partie du châssis (10), plus particulièrement des rouleaux de convoyage, entraînés de manière motorisée, disposés entre une première partie et une deuxième partie du châssis, et avec une disposition de câble (1) reliée électriquement avec les moyens de convoyage (11),
**caractérisée en ce que**
sur la première partie de châssis, d'une part sur un côté orienté vers les moyens de convoyage (11), sont disposés un câble d'alimentation en énergie (14) relié électriquement avec les moyens de convoyage (11) et des boîtes de raccordement (15) et **en ce que**, sur la première partie de châssis, d'autre part sur un côté opposé aux moyens de convoyage (11), est fixée la disposition de câble (1) reliée électriquement avec les moyens de convoyage (11), la disposition de câble (1) comprenant un premier conducteur électrique (2), au moins un deuxième conducteur électrique (3) et plusieurs dispositifs de connexion (4) disposés le long des conducteurs (2, 3), chacun avec plusieurs contacts électriques (5...8), les conducteurs (2, 3) étant isolés les uns par rapport aux autres et au moins contact (5...8) étant relié avec un conducteur électrique (2, 3) et le premier conducteur (2) étant sectionné au niveau de chaque dispositif de connexion (4) et une extrémité du premier conducteur (2) étant relié avec un contact électrique (5, 6).

2. Installation de convoyage selon la revendication 1, **caractérisée en ce que** le premier conducteur (2) est conçu comme une ligne en guirlande et au moins un deuxième conducteur (3) est conçu comme une ligne de bus de données.

3. Installation de convoyage selon la revendication 2, **caractérisée en ce que** deux deuxièmes conducteurs (3) sont conçus comme des lignes torsadées bifilaires et sont conçus comme des lignes de bus de données.

4. Installation de convoyage selon la revendication 2 ou 3, **caractérisée en ce qu'**au moins un deuxième conducteur (3) est conçu comme une ligne d'alimentation en énergie.

5. Installation de convoyage selon l'une des revendications 2 à 4, **caractérisée en ce que** la disposition de câble (1) est conçue pour la liaison électrique de plusieurs moyens de convoyage (11) entraînés de manière motorisée de l'installation de convoyage (9).

6. Installation de convoyage selon la revendication 1, **caractérisée en ce que** la liaison électrique de la disposition de câble (1) avec les moyens de convoyage (11) a lieu à travers un évidement (16) dans le châssis (10).

7. Procédé de fabrication d'une installation de convoyage (9) selon la revendication 1, avec un châssis (10) ainsi que plusieurs moyens de convoyage (11) entraînés de manière motorisée, disposés entre une première partie et une deuxième partie du châssis (10), plus particulièrement des rouleaux de convoyage, **caractérisé par** les étapes suivantes :
a) fabrication de plusieurs segments (12, 13) avec chacun une première partie de châssis et une deuxième partie de châssis, ainsi que de moyens de convoyage (11) entraînés de manière motorisée, par
- montage d'un câble (14) pour l'alimentation électrique des moyens de convoyage (11) au niveau de chaque segment (12, 13) sur la première partie de châssis sur un côté orienté vers les moyens de convoyage (11),
- montage d'au moins un moyen de convoyage (11) sur la première partie de châssis et de la deuxième partie de châssis au niveau de chaque segment (12, 13) et mise en contact électrique des moyens de convoyage (11) avec le câble d'alimentation en énergie (14),
b) positionnement des segments (12, 13) au niveau de leur emplacement prévu,
c) liaison des câbles d'alimentation en énergie (14) de segments (12, 13) adjacents et
d) montage d'une disposition de câble au niveau des segments (12, 13) sur la première partie de châssis sur un côté opposé aux moyens de convoyage (11) et mise en contact électrique avec lesdits moyens de convoyage (11), la disposition de câble (1) étant posée sans coupure sur au moins deux segments (12, 13).

8. Procédé selon la revendication 7, **caractérisé en ce que** l'étape a) comprend le montage d'une boîte de raccordement (15) sur la première partie de châssis sur un côté orienté vers les moyens de convoyage (11) ainsi que la liaison électrique de ceux-ci avec le câble d'alimentation en énergie (14) et la liaison électrique du moyen de convoyage (11) avec le câble d'alimentation en énergie (14) par liaison électrique du moyen de convoyage (11) avec ladite boîte de raccordement (15).
